# EUROPEAN PATENT SPECIFICATION

(11) **EP 3 085 748 B1**
(45) Date of publication and mention of the grant of the patent: **27.12.2017**
(21) Application number: 15164336.8
(22) Date of filing: 20.04.2015
(51) Int. Cl.: C09D 163/00, C09D 5/08, C09D 167/00

(54) **COATINGS**
BESCHICHTUNGEN
REVÊTEMENTS

(43) Date of publication of application: 26.10.2016
(73) Proprietor: Jotun A/S, 3202 Sandefjord (NO)
(72) Inventor: Martinsen, Morten, 3202 Sandefjord (NO); Soerensen, Benedicte Riise, 3202 Sandefjord (NO); Isaksen, Stian Moe, 3202 Sandefjord (NO); Jakobsen, Martin Gjerde, 3202 Sandefjord (NO); Mathisen, Petter, 3202 Sandefjord (NO)
(74) Representative: Campbell, Neil Boyd

(56) References cited:
- WO-A1-2011/124663
- NL-A- 8 203 502

## Description

This invention relates to a fast curing anti-corrosive system, in particular to a substrate coated with an epoxy primer layer and a fast cure top coat. The epoxy primer layer is preferably provided with a curing accelerator and combined with a top coat layer which cures via a real Michael addition mechanism to form the anti-corrosive system of the invention.

### Background of Invention

The coating of steel with primers to prevent corrosion is well known. In particular, epoxy coatings are a familiar primer coating. Epoxy coatings are used mainly as part of an anti-corrosive coating system on steel substrates due to outstanding corrosion and chemical resistance.

Epoxy coating compositions are typically two-component products consisting of an epoxy component and a curing agent.

The primer epoxy layer is often coated with a top coat. Typical top coats applied over epoxy primer layers include urethane-, polyurea-, epoxy-, alkyd-, acrylic-, or chlorinated polyolefin based coatings or an antifouling paint. In WO2009/141438, a fast curing ultra-high solids content anti-corrosive composition is described based on an epoxy layer and polyurea top coat. A polyurea top coat is one based on the reaction of an amine with iso-cyanate. The polymerization reaction between amine and isocyanates is, in general, extremely fast however leading to poor pot life. The pot life of a coating refers to the time between the mixing of the components and the time when the mixture becomes impossible to apply to a substrate as it has cured. It will be appreciated that the curing of the top coat should take place on the substrate and not in the pot.

Epoxy and polyurea paint systems are however used where superior corrosion protection and fast process time is needed. Such paint systems are designed to be used in aggressive corrosive environments like off-shore platforms, windmill towers, steel chimneys, power stations, steel bridges, cranes etc. in costal, off-shore, or industrial environments, but also tidal zone areas where fast salt water resistance is required.

Another advantage of fast curing products is that they lower the overall processing time and this has become a very important parameter for paint applicators. However it has so far only been possible to decrease the curing time to a certain level if the workability and corrosion properties of the coating are to be preserved. The curing process starts on the surface of the coating. When curing is too fast the soft uncured part of the coating will not have sufficient strength to "carry" the stress built up during curing and defects will develop on the surface leading to subsequent loss of adhesion, cohesion and corrosion problems.

Another important parameter is the content of Volatile Organic Compounds (VOC) of a coating system. For environmental reasons, it is important to keep the VOC of a coating system to an absolute minimum.

There is thus a need for a coating system for aggressive corrosive environments, enabling faster processing with good pot life and coating properties and low VOC.

By introducing a fast curing, high volume solids, anticorrosive system for aggressive environments with short dry to handle times while maintaining a pot life suitable for traditional airless spray equipment, the potential for increasing the effectiveness of the coating process is huge. The high volume solids will also decrease the volatile organic compounds released to the environment.

The epoxy primer layer described above is preferably combined with a fast drying top coat with good pot life. The primer layer needs to be compatible with the top coat.

The present inventors have surprisingly found a fast drying epoxy primer suitable for aggressive environments (From C-4 according to ISO 12944) can be prepared using an epoxy resin, preferably in combination with a curing accelerator. Moreover, that primer layer can be combined with a fast drying top coat which can withstand sea water, chemicals and solvents and UV-degradation. The top coat is based on components that cure via a real Michael addition.

The epoxy primer and the Real Michael Addition (RMA) top coat have a pot life suitable for traditional airless spray equipment. The dry to handle time for the complete system may be however, no more than 4.5 hours at ambient temperatures. It is surprisng that the system claimed can maintain fast drying while maintaining the anticorrosive properties. It is further preferred feature that the pot life is extended by the presence of a component (D), such as a triazole or succinimide.

A coating composition similar to that which we use in our top coat is described in WO2011/124665. This document describes a crosslinkable composition with a latent hardener which offers fast drying times without compromising the pot life of the product. Only one coat systems are described however and we have tested this system direct to metal and found that the adhesion is poor. The coating is not suitable for direct to metal application.

EP1788048 describes a primer layer material formed from epoxy and curing agent with an adiditonal film modifier which is might be a modified epoxy resin or hydrocarbon resin (such as xylene resin).

The combination therefore of the primer layer composition and top coat composition of the invention gives rise to a remarkable synergy of performance in terms of pot life for application, drying time and coating properties.

### Summary of Invention

Thus, viewed from one aspect the invention provides a coating system suitable for application to a metallic substrate comprising:
A) a primer layer composition comprising:
   (i) a first composition comprising:
      (I) at least one epoxy resin; and
   (ii) a second composition comprising at least one amine curing agent; and
B) a top coat composition comprising:
   (i) a first composition comprising:
      (I) at least one crosslinkable component having at least two acidic C-H protons;
      (II) at least one unsaturated group containing component that reacts via real Michael addition with component (I), and
   (ii) a second composition comprising a catalyst for said Michael addition.

Viewed from another aspect the invention provides a coating system suitable for application to a metallic substrate comprising:
(A) a primer layer composition comprising
   (i) a first composition comprising:
      (I) at least one epoxy resin; and
   (ii) a second composition suitable for mixing with said first composition before application of the primer composition to a substrate, comprising at least one amine curing agent; and
(B) a top coat composition comprising:
   (i) a first composition comprising:
      (I) at least one crosslinkable component having at least two acidic C-H protons;
      (II) at least one unsaturated group containing component that reacts via real Michael addition with component (I), and
   (ii) a second composition, suitable for mixing with said first composition before application of the top coat composition to the substrate, comprising a catalyst for said Michael addition.

Viewed from another aspect the invention comprises a metal substrate having coated thereon a coating system as hereinbefore defined. In a preferred embodiment, the invention is based on a two layer system consisting of the primer layer and top coat. There are preferably no additional layers present.
(ii)

Viewed from another aspect the invention comprises a metal substrate having coated thereon a coating system as hereinbefore defined which has been allowed to cure.

Viewed from another aspect the invention provides a process for coating a metal substrate such as a steel substrate comprising applying to said substrate a primer layer composition comprising:
(I) at least one epoxy resin; and
(II) at least one amine curing agent; and
applying to said primer layer composition a top coat composition comprising:
(I) at least one crosslinkable component having at least two acidic C-H protons and a component;
(II) at least one unsaturated group containing component that reacts via real Michael addition with component (I); and
(III) a catalyst for said Michael addition;
and allowing said compositions to cure.

Viewed from another aspect the invention provides a coated metal substrate obtained by the process as herein defined.

Viewed from another aspect the invention provides the use of coating composition as hereinbefore defined for protecting a metal substrate, e.g. from corrosion.

### Detailed description of Invention

This invention relates to an anti-corrosive coating system for a metal substrate such as a steel substrate. That steel substrate can be present on any object on which the coating of the invention might be useful. In particular, the substrate is one which is exposed to the elements, such as wind, rain, ice or snow or is one which is exposed to water, especially sea water. The substrate may be on an off-shore platform, wind turbine, chimney, power station or other industrial unit, bridge, crane, ship, vehicle and so on.

The system comprises an epoxy primer layer and a top coat layer formed via a crosslinking/curing reaction that occurs via a Michael addition mechanism. That reaction is encouraged by the use of a catalyst, in particular a base.

### Primer layer composition

The primer layer composition comprises a binder based on at least one epoxy resin. The combination of epoxy resins within the primer layer composition is called a binder herein. That binder may be combined with an acrylic accelerator in a first composition. Shortly before application of the primer layer composition to a substrate, the first composition is mixed with a second composition comprising a curing agent to form the primer layer composition. That primer layer composition then cures on the substrate to form the primer layer.

Preferably the binder in the primer layer composition comprises at least two epoxy resins. Ideally, the primer layer composition comprises at least one liquid epoxy resin. More preferably, at least one of the epoxy resins is a liquid and one is a solid. The terms liquid and solid refer to the state of the epoxy resin at room temperature and pressure of 23°C, 1 atm.

### Epoxy Resin

The primer layer composition contains at least one epoxy resin, ideally at least one liquid epoxy resin.

A particular feature of the coating system of the invention is the high volume solids % ("VS%") and thereby the low content of volatile organic compounds (VOC) present. The primer layer composition preferably has a volume solids % of at least 60%, such as at least 70%. The first composition preferably has a volume solids % of at least 60%, such as at least 70% as well.

The volume solids (expressed in %) is often referred to as "VS%". VS% is determined according to D5201 as described in the examples.

The very low content of VOC renders it possible to establish a fast curing coating system which has a very short "dry-to-handle" time, i.e. preferably a "through-dry" time which is less than 4,5 hours (ASTM 5895). In certain preferred embodiments, the "through dry" time is less than 4 hours at 23°C/50% RH. The "through-dry" time is conveniently determined as described in the Examples section (using ASTM D5895). It will be appreciated that the dry to handle time is also a function of the interval between application of the primer layer composition and top coat composition. It is preferred if the dry time of the coating composition, taking away the interval time, is less than 2.5 hrs, such as less than 2 hrs, especially less than 1.5 hrs.

The epoxy-based binder system preferably comprises one or more epoxy resins selected from aromatic or non-aromatic epoxy resins, containing more than one epoxy group per molecule, which is placed internally, terminally, or on a cyclic structure. The use of multiple epoxy groups (i.e. at least 2 such groups) ensures that a crosslinked network can form.

The primer layer composition must also contain a curing agent or hardener to act as a cross-linking agent. It will be appreciated that the hardener and epoxy resin are shipped apart and mixed shortly before use. It is the speed at which that mixing cures in the pot and hence leads to a coating which is impossible to apply which defines the pot life of the primer layer composition.

Suitable epoxy-based binder systems are believed to include epoxy and modified epoxy resins selected from bisphenol A, bisphenol F, Novolac epoxies, cyclo aliphatic epoxies, glycidyl esters and epoxy functional acrylics or any combinations thereof.

The epoxy resin of the primer layer may have an EEW value of 156 to 1000. However, it is particularly preferred if the EEW of an epoxy resin of the primer layer composition is less than 300 such as 156 to 300, especially 156 to 250, especially 185-200. Ideally, the epoxy with this low level of EEW is a liquid.

This level of EEW is important as it enables the preparation of a primer layer composition having a desirable mixing ratio (e.g. 1:1 to 4:1, such as 3:1 by volume) between epoxy resin component (first composition) and curing agent component (second composition). Also, it is well known that low Mw (often correlated with low EEW) resins have lower viscosity thus demanding less solvent for formulation. That reduces VOC content.

The use of higher Mw (high EEW) resins is also possible, however, as these might give faster drying, better flexibility and better adhesion to the substrate.

### Solid Epoxy

In a further preferred embodiment, a liquid epoxy primer is combined with a solid epoxy resin in the binder composition. We have found that the combination of solid and liquid epoxy resins leads to an ideal drying/curing time, whilst minimising VOC. If solid epoxy resins are used exclusively, these need to be added to the paint as a solution (for handling) and that gives rise to an increased VOC content of the paint. By adding solid and liquid epoxy resins, we can reduce solvent and we therefore offer an ideal balance between drying/curing time, ease of handling and VOC requirements.

The solid epoxy resin contains one or more epoxy groups. Suitable epoxy-based binder systems are believed to include epoxy and modified epoxy resins selected from bisphenol A, Novolac epoxies, non-aromatic hydrogenated epoxies, cyclo aliphatic epoxies, glycidyl esters and epoxy functional acrylics or any combinations thereof.

Preferred solid epoxy resins include bisphenol A based resins, such as 4,4'-isopropylidenediphenol-epichlorohydrin resins, novolac resins, and so on.

Most preferred are solid epoxy resins with an equivalent epoxy weight (EEW) of 300-1000. It is most preferred however if the EEW of the solid epoxy resin is in the range of 350 to 750, such as 400 to 700, especially 500 to 670. The use of a bisphenol A type resin is most preferred.

Alternatively viewed, in a preferred embodiment at least one epoxy resin component has an EEW less than 300 and a second epoxy resin has an EEW more than 300.

If there are both liquid and solid epoxy resins present in the binder of the primer layer, it is preferred if the liquid epoxy resin is in excess relative to the solid epoxy resin. Typically, the weight ratio of liquid to solid epoxy resin is in the range of 2:1 to 1:1, such as 2:1 to 1.1:1 in the binder.

As noted below, the primer layer composition will contain other components in addition to the epoxy resins forming the binder component. The binder component preferably forms 10 to 50 wt% of the primer layer composition, such as 15 to 30 wt%. The binder component preferably forms 5 to 50 wt% of the first composition that makes up the primer layer composition, such as 15 to 30 wt% of the first composition.

### Acrylic Ester Accelerator

The primer layer composition of the invention may contain an acrylic ester accelerator. That ester is preferably an aliphatic acrylate monomer (and hence contains multiple functional groups). Ideally, therefore, the acrylic ester is a multiester comprising at least two acrylate functional groups. Such a multiester may be a diester, triester or tetraester. The ester may be an acrylate ester or methacrylate ester or a mixture thereof.

It is preferred therefore if the acrylic ester comprises at least two (meth)acrylate groups linked by an organic linker.

It will be preferred if the molecular weight of the acrylic ester is less than 1000, such as less than 750, especially less than 500 g/mol.

Ideally, the acrylic ester will be the (meth)acrylate ester of a polyol such as a diol, or triol or a sugar based polyol such as a sugar alcohol. It is not essential for all OH groups within a polyol to carry the (meth)acrylate ester group however, there should preferably be at least two ester functionalities in the acrylic ester.

Suitable polyols for functionalisation include alkylene diols (hexanediol, pentanediol etc), saccharides (e.g. mono or disaccharides) or polyols (especially sugar alcohols) such as erythritol, sorbitol, maltitol and mannitol.

Mixtures of acrylic esters may also be used.

Acrylic esters of interest are therefore of formula 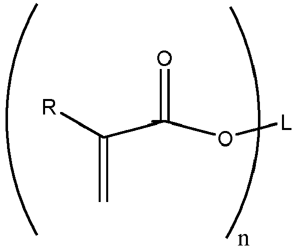
where R is H or Me;
n is 2-5;
and L represents the residue of a polyol such as the residue of hexandiol or the residue of a saccharide or sugar alcohol. Thus, at least two OH groups of the polyol carry the acrylate ester shown in the formula above.

L will preferably contain only C, H and O atoms. It will preferably be of low Mw such as 400 g/mol or less.

The acrylic ester is a preferred component of the primer layer composition. It may form 0.1 to 5 wt% of the primer layer composition, such as 0.1 to 1 wt% especially 0.1 to 0.5 wt%.

The acrylic ester is formulated as part of the first composition (i.e. with the binder as opposed to with the curing agent). It may form 0.1 to 7 wt% of the first composition, such as 0.1 to 1.5 wt% especially 0.1 to 0.75 wt% of the first composition.

### Reactive diluent

The primer layer composition can further comprise a reactive diluent, preferbly formed from a modified epoxy compound. This diluent improves the curing properties of the composition at low temperatures.

Examples of such reactive diluents include phenyl glycidyl ether, alkyl glycidyl ether (number of carbon atoms in alkyl group: 1 to 13), glycidyl ester of versatic acid (R¹ R² R³ C-COO-Gly, where R¹ R² R³ are alkyl groups such as C8 to C10 alkyl and Gly is a glycidyl group), olefin epoxide (CH₃-(CH₂)n-Gly, wherein n=11 to 13, Gly: glycidyl group), 1,6-hexanediol diglycidyl ether (Gly-O-(CH₂)₆-O-Gly), neopentyl glycol diglycidyl ether (Gly-O-CH₂-C(CH₃)₂-CH₂-O-Gly), trimethylolpropane triglycidyl ether (CH₃-CH₂-C(CH₂-O-Gly)₃), and C1-20-alkylphenyl glycidyl ether (preferably C1-5 alkylphenylglycidyl ether), e.g., methylphenyl glycidyl ether, ethylphenyl glycideyl ether, propylphenyl glycidyl ether. Another preferred option is Cardolite NC-513 derived from the reaction of epichlorohydrin and an oil obtained from the shells of cashew nuts.

Of the above reactive diluents, preferable are Cardolite NC-513, alkyl glycidyl ethers and alkylphenyl glycidyl ether because they have low viscosity, can exhibit dilution effect (decrease of composition viscosity), can provide a high-solids paint (that is, a high solids content and a low solvent content in the paint are obtained, and a thick coating film can be obtained within a small coating time. These diluents can also improve painting workability, control pot life and reduce environmental pollution.

The above reactive diluents can be used singly or in combination of two or more diluents. Examples of the reactive diluents include "Epodil 759" (alkyl(C12 - C13) glycidyl ether, available from Air Products and Chemicals, Inc., epoxy equivalent: 285) and "Cardolite NX 4764" (alkylphenol glycidyl ether, available from Cardolite Corporation, epoxy equivalent: 400), and Cadolite NC-513 from Cardolite Corporation.

In the primer layer composition as a whole, the reactive diluent is desirably contained in an amount of 0 to 40% by weight, preferably 0 to 20% by weight, e.g. 1-5wt%.

By adding the reactive diluent in the above amount, viscosity of the main primer layer composition is lowered to allow preparation of a high-solids composition, and an anticorrosive coating composition having excellent low-temperature curability and low solvent content.

The reactive diluent is again preferably formulated as part of the first composition in the primer layer composition.

### Additives

The primer layer composition may also contain various other components, e.g. to enhance its anticorrosive properties. In particular, the primer layer composition may comprise extenders such as metal oxides, metal carbonates, talc, feldspar and so on to act as anti-corrosive materials

The use of talc, titanium oxide, aluminium oxide, feldspar and calcium carbonate is especially preferred. The primer layer composition or the first composition may comprise 30 to 70 wt% of extender additives. Ideally these materials form more than 55wt% of the primer layer composition.

Other ingredients than the above various ingredients, such as silane coupling agent, anti-sagging/anti-setting agent, plasticizer, inorganic dehydrator (stabilizer), antifouling agent and other film-forming ingredients, can be added when needed.

Other additives, pigments and of course solvent can be present. Any pigment present is for example, an extender pigment or a color pigment. Examples of the extender pigments include barium sulfate, potash feldspar, baryta powder, silica, calcium carbonate, talc, mica and glass flake. Examples of the color pigments include titanium white, red iron oxide, yellow iron oxide and carbon black.

The total amount of the above-mentioned various pigments including the mica varies depending upon the use purpose and cannot be determined indiscriminately, but they are frequently contained in the total amount of 10 to 75% by weight in the first composition. Further, they are frequently contained in the total amount of 10 to 75 parts by weight in 100 parts by weight of the solids in the first composition.

The solvent content of the primer layer composition is ideally less than 20 wt%. Suitable solvents are hydrocarbons such as xylene. Solvent is preferably added to the first composition used to make the primer layer composition. Ideally that first composition will contain 5 to 20 wt% solvent. The nature of the solvent in the primer layer (or indeed in the top coat composition) is not restricted, and publicly known solvents having boiling points of wide range are employable. Examples of such solvents include xylene, toluene, MIBK, methoxypropanol, MEK, butyl acetate, benzyl alcohol, octyl phenol, resorcinol, n-butanol, isobutanol and isopropanol. The above solvents can be used singly or in combination of two or more kinds. These solvents can be used in the top coat layer although the use of alcohols is favoured in the top coat as explained in detail below.

The epoxy primer composition may also comprise a particulate material (e.g. a powder) which increases the anticorrosive properties of the coat. Zinc powder or zinc dust, which is well known to incorporate in epoxy primer to produce a zinc epoxy primer, is in this respect of special interest. Zinc powder or zinc dust can all or partly be replaced by a zinc alloy, e.g. as disclosed in WO 2008/125610. Auxiliary corrosion inhibitors, for example a molybdate, phosphate, tungstate or vanadate, ultrafine titanium dioxide, and/or zinc oxide and/or a filler such as silica, calcined clay, alumina silicate, talc, barytes or mica may also be incorporated.

If present, the amount of the anticorrosive constituent is typically 1-65 % by solids volume of the paint.

As the anti-sagging/anti-setting agent (thixotropic agent), a thixotropic agent, such as polyamide wax, polyethylene wax or a bentonite-based thixotropic agent, may be employed. Examples of such anti-sagging/anti-setting agents include "Disperon 4200-20" and "Disperon A630-20X" (available from Kusumoto Chemicals, Ltd.) and "ASAT-250F" (available from Ito Seiyu K.K.).

### Curing agent

To allow curing of the first composition containing the epoxy binder, an amine curing agent is used as is well known in the art. This may also be known as a crosslinking agent or hardener. To function as a curing agent, the compound must contain at least two "reactive" hydrogen atoms linked to nitrogen. Thus the curing agent typically contains at least two amines which may be primary or secondary.

Suitable curing agents are believed to include amines or amino functional polymers selected from aliphatic amines and polyamines (e.g. cyclo-aliphatic amines and polyamines), polyamido amines, polyoxy alkylene amines (e.g. polyoxy alkylene diamines), aminated polyalkoxy ethers (e.g. those sold commercially as "Jeffamines"), alkylene amines (e.g. alkylene diamines), aralkyl amines, aromatic amines, Mannich bases (e.g. those sold commercially as "phenalkamines"), amino functional silicones or silanes, and including epoxy adducts and derivatives thereof.

Examples of suitable commercially available curing agents are:
∘ Cardolite NC-541, ex Cardanol Chemicals (USA), Mannich base
∘ Cardolite Lite 2001, ex Cardanol Chemicals (USA), Mannich base
∘ Sunmide CX-105X, ex Sanwa Chemical Ind. Co. Ltd. (Singapore), Mannich base
∘ Epikure 3140 Curing Agent, ex Resolution Performance Products (USA), polyamidoamine
∘ SIQ Amin 2030, ex SIQ Kunstharze GmbH (Germany), polyamidoamine
∘ Epikure 3115X-70 Curing Agent, ex Resolution Performance Products (USA), polyamidoamine
∘ SIQ Amin 2015, ex SIQ Kunstharze GmbH (Germany), polyamidoamine
∘ Polypox VH 40309/12, ex Ulf Prümmer Polymer-Chemie GmbH (Germany), polyoxyalkylene amine
∘ Polypox VH 40294, ex Ulf Prümmer Polymer-Chemie GmbH (Germany), Mannich base Ancamine 2609, ex Air Products (UK), Mannich base
∘ Adeka Hardener, ex Adeka Corporation (Japan), Mannich base
∘ AP1077, Admark, Mannich base
∘ CeTePox 1490 H, ex CTP Chemicals and Technologies for Polymers (Germany), polyoxyalkylene amine
∘ Epoxy hardener MXDA, ex Mitsubishi Gas Chemical Company Inc (USA), aralkyl amine Diethylaminopropylamine, ex BASF (Germany), aliphatic amine
∘ Gaskamine 240, ex Mitsubishi Gas Chemical Company Inc (USA),aralkyl amine
∘ Cardolite Lite 2002, ex Cardanol Chemicals (USA), Mannich base
∘ Aradur 42 BD, ex Huntsman Advanced Materials (Germany), cycloaliphatic amine
∘ Isophorondiamin, ex BASF (Germany), cycloaliphatic amine
∘ Epikure 3090 Curing Agent, ex Resolution Performance Products (USA), polyamidoamine adduct with epoxy
∘ Crayamid E260 E90, ex Cray Valley (Italy), polyamidoamine adduct with epoxy
∘ Aradur 943 CH, ex Huntsman Advanced Materials (Switzerland), alkylene amine adduct with epoxy

The use of a phenalkamines curing agent is preferred. It will be appreciated that the curing agent is shipped separately to the epoxy resin and is only mixed with the epoxy resin shortly before application. The curing agent of the invention is therefore shipped as a second composition that is combined with the first composition to form the primer layer composition.

In a preferred embodiment, the curing agent is employed without the use of a separate catalyst to encourage the crosslinking process. Some known curing agents are however combined with a catalyst such as a tertiary amine catalyst and that is within the scope of the invention. It will be appreciated that the curing agent can be supplied neat or in a solvent.

The stoichiometric amount of crosslinker relative to epoxy containing compounds may be 20-98%, preferably 35-95%. The stoichiometric amount of epoxy containing compound is based on number of epoxy groups and may be around the same as or exceed that of the crosslinker.

It is preferred if the epoxy-based binder systems are ambient curing binder systems.

The number of "hydrogen equivalents" in relation to the one or more curing agents is the sum of the contribution from each of the one or more curing agents. The contribution from each of the one or more curing agents to the hydrogen equivalents is defined as grams of the curing agent divided by the hydrogen equivalent weight of the curing agent, where the hydrogen equivalent weight of the curing agent is determined as: grams of the curing agent equivalent to 1 mol of active hydrogen. For adducts with epoxy resins the contribution of the reactants before adductation is used for the determination of the number of "hydrogen equivalents" in the complete epoxy-based binder system.

The number of "epoxy equivalents" in relation to the one or more epoxy resins is the sum of the contribution from each of the one or more epoxy resins. The contribution from each of the one or more epoxy resins to the epoxy equivalents is defined as grams of the epoxy resin divided by the epoxy equivalent weight of the epoxy resin, where the epoxy equivalent weight of the epoxy resin is determined as: grams of the epoxy resin equivalent to 1 mol of epoxy groups. For adducts with epoxy resins the contribution of the reactants before adductation is used for the determination of the number of "epoxy equivalents" in the epoxy- based binder system.

Preferably the ratio between the hydrogen equivalents of the totality of the curing agents and the totality of epoxy equivalents of epoxy resins is in the range of 50: 100 to 140: 100.

Especially preferred epoxy-based binder systems have a ratio between the hydrogen equivalents of the curing agent and the epoxy equivalents of the epoxy resin in the range of 60: 100 to 130: 100 such as 80: 100 to 120: 100, e.g. 90: 100 to 110: 100.

The mixing ratio of the first and second compositions is of course governed by the relative amounts of epoxy and active hydrogens present. Ideally, the mixing ratio in solids volume is 1:1 to 10:1, first to second composition, such as 5:1 to 2:1.

Unless otherwise stated, all amounts stated as % by solids volume should be understood as % by solids volume of the mixed primer layer composition ready to be applied. In contrast hereto, the expression "volume solids %" is determined experimentally.

The curing agent composition (second composition) and primer layer composition are mixed shortly before application to the substrate. The mixed composition ideally has a pot life of at least 30 mins, such as at least 45 mins measured as described in the examples which follow.

### Top Coat Material

The top coat formulation is one which has an extended pot life and is fast curing. Unlike many prior art top coats, it is not based on a polyurethane or polyurea but requires a real Michael addition reaction (or simply a Michael addition reaction) during the curing process.

The real Michael addition reaction is known in the art. It requires a component with at least 2 activated unsaturated groups (also referred to as the RMA acceptor) and a component with at least 2 acidic protons C-H in activated methylene or methine groups (hereafter also referred to as the RMA donor) to react and crosslink to each other in the presence of a strong base catalyst. The classic Michael addition mechanism is depicted below.

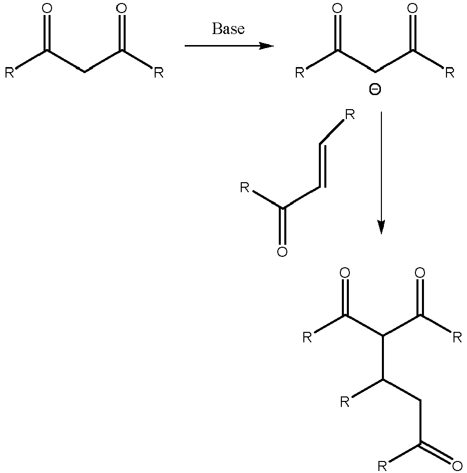

In organic chemical terms, deprotonation of a structure R-CO-CH₂-CO-R by a base leads to carbanion stabilized by its electron-withdrawing groups. This anion has resonance structures two of which have enolate ions. This nucleophile reacts with the electrophilic alkene in a conjugate addition reaction. Proton abstraction from protonated base (or solvent) by the enolate is the final step.

Real Michael addition is activated by strong bases, but also inhibited by the presence of acidic species that will consume these basic catalysts. In tuning the reactivity of coating systems in view of achieving a desirable drying profile, there are various requirements to balance. The drying profile (also referred to as the reaction profile or as the curing profile) is the progress of the crosslinking reaction as a function of time. It is required that the drying profile allows build-up of mechanical properties as fast as possible, to help the productivity of the coater. It is further also required to have a drying profile that is robust, i.e. the reactivity (and hence the resulting drying profile) is not strongly influenced by accidental low levels of acidic contaminants being present.

The top coat is ideally formed therefore from a crosslinkable composition comprising reactive components (I) and (II) each comprising at least 2 reactive groups wherein the at least 2 reactive groups of component (I) are acidic protons (C-H) in activated methylene or methine groups and the at least 2 reactive groups of component (II) are activated unsaturated groups (e.g. C=C), to achieve crosslinking by Real Michael Addition (RMA) reaction in the presence of a base catalyst.

The reactive functionality of a component is defined as the average number of functional groups per molecule of that component. In a system in which component (I) and (II) are separate molecules, at least one of components (I) or (II) preferably comprises, on average, more than 2 reactive functional groups to achieve a crosslinked network.

The one or more reactive components (I) and (II) and the base catalyst are most conveniently present in the crosslinkable composition as separate molecules. Preferably, reactive components (I) and (II) are separate and each independently in the form of polymers, oligomers, dimers or monomers comprising at least 2 reactive groups. For example, Component (I) can be a malonate comprising one or more malonate groups, for example in a polymer. For coating applications, at least one of component (I) or (II) preferably are oligomers or polymers.

### Top Coat Component (I): Activated methylene or methine (CH) Group-Containing Components

Suitable components (I) preferably comprise an activated C-H derivative having a structure according to formula 2: 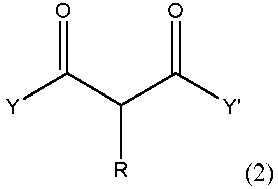
wherein R is hydrogen or an alkyl or aryl group; and
Y and Y' are alkyl, aralkyl or aryl (R*), alkoxy or aryloxy (-OR*) or wherein in formula 2 the -C(=O)-Y and/or -C(=0)-Y' group(s) is replaced by CN, NH₂ or aryl. Most preferred is that A comprises malonate (Y and Y' are alkoxy or -OR*) or acetoacetate (Y is alkoxy or -OR* and Y' is alkyl or -R*). R* is preferably a C6-10 aryl group such as phenyl.

The preferred malonates are polymers, preferably a polyester, polyurethane, acrylic or polycarbonate polymer. Also mixtures or hybrids of these polymer types are possible.

In a most preferred embodiment of the crosslinkable composition, component (I) is a malonate containing compound (i.e. comprising -OCO-CH₂-COO-). It is preferred that in the crosslinkable composition the majority of the activated C-H groups are from malonate, that is more than 50%, preferably more than 60%, more preferably more than 70%, most preferably more than 80% of all activated C-H groups in the crosslinkable composition are from malonate.

Examples of suitable components containing activated methylene or methine groups are generally disclosed in US4871822 (see especially column 4, lines 15-28), which components contain a methylene and/or monosubstituted methylene group in the alpha -position to two activating groups such as, for example, carbonyl, cyano, sulfoxide and/or nitro groups. Preferred are components containing a methylene group in the alpha -position to two carbonyl groups, such as malonate and/or acetoacetate group-containing components, malonates being most preferred.

Suitable examples of malonate group-containing components may be mentioned malonic acid esters as disclosed in US2759913 (column 8, lines 51-52), and malonate group-containing oligomeric and polymeric components as disclosed in US4602061 (column 1, line 10 through column 2, line 13). Preferred are the oligomeric and/or polymeric malonate group-containing components such as, for example, polyesters, polyurethanes, polyacrylates, epoxy resins, polyamides and polyvinyl resins containing malonate groups in the main chain, pendant or both. The malonate group-containing polyesters can be obtained preferably by the transesterification of a methyl or ethyl diester of malonic acid, with multifunctional alcohols that can be of a polymeric or oligomeric nature. Malonate group-containing polyurethanes can be obtained, by reacting a polyisocyanate with a hydroxyl group-containing ester of a polyol and malonic acid, or e.g. by transesterification of an hydroxy functional polyurethane with a dialkylmalonate. Malonate group-containing epoxy esters can be obtained by esterifying an epoxy resin with malonic acid or a malonic monoester, or acid functional malonate polyester, or by transesterification with a dialkyl malonate, optionally with other carboxylic acids and derivatives thereof. Malonate group-containing polyamides, or polyamide-esters, can be obtained in the same manner as the polyesters, wherein at least a part of the hydroxy component is replaced with a mono- and/or polyfunctional primary and/or secondary amine. The malonate group-containing polyamides with malonamide functionality are less preferred. Other malonate group-containing polymers may be obtained by the transesterification of an excess of a dialkyl malonate with hydroxy-functional acrylic polymer. In this manner, a polymer with malonate group-containing side-chains may be formed. Any excess dialkyl malonate may be removed under reduced pressure or, optionally, be used as a reactive solvent.

Especially preferred malonate group-containing components for use with the present invention are the malonate group-containing oligomeric or polymeric esters, ethers, urethanes and epoxy esters containing 1-50, more preferably 2-10, malonate groups per molecule. In practice polyesters and polyurethanes are preferred. It is also preferred that such malonate group- containing components have a number average molecular weight (Mn) in the range of from about 100 to about 5000, more preferably, 250-2500, and an acid number of about 2 or less. Also monomalonates can be used as they have 2 reactive C-H per molecule. Monomeric malonates can, in addition, be used as reactive diluents.

Suitable acetoacetate group-containing components are acetoacetic esters as disclosed in US2759913 (column 8, lines 53-54), diacetoacetate components as disclosed in US4217396 (column 2, line 65 through column 3, line 27), and acetoacetate group-containing oligomeric and polymeric components as disclosed in US4408018 (column 1, line 51 through column 2, line 6). Preferred are the oligomeric and/or polymeric acetoacetate group-containing components.

Suitable acetoacetate group-containing oligomeric and polymeric components can be obtained, for example, from polyalcohols and/or hydroxy-functional polyether, polyester, polyacrylate, vinyl and epoxy oligomers and polymers by reaction with diketene or transesterification with an alkyl acetoacetate. Such components may also be obtained by copolymerization of an acetoacetate functional (meth)acrylic monomer with other vinyl- and/or acrylic-functional monomers.

Especially preferred of the acetoacetate group-containing components for use with the present invention are the acetoacetate group-containing oligomers and polymers containing at least 1, preferably 2-10, acetoacetate groups. It is also especially preferred that such acetoacetate group-containing components should have an Mn in the range of from about 100 to about 5000, and an acid number of about 2 or less.

Components containing both malonate and acetoacetate groups in the same molecule are also suitable. Additionally, physical mixtures of malonate and acetoacetate group-containing components are suitable. Alkylacetoacetates can, in addition, be used as reactive diluents.

Again as exemplified by the previously incorporated references, these and other malonate and/or acetoacetate group-containing components that can be used in the composition, and their methods of production, are generally known to those skilled in the art, and need no further explanation here.

The amount of component (I) in the top coat composition may be 5 to 50 wt%, such as 10 to 40 w% of the top coat composition.

### Top Coat Component (II): Activated Unsaturated Group-Containing Components

Suitable components (II) generally can be ethylenically unsaturated components in which the carbon-carbon double bond is activated by an electron-withdrawing group, e.g. a carbonyl group in the alpha-position. Representative examples of such components are disclosed in US2759913 (column 6, line 35 through column 7, line 45), DE-PS-835809 (column 3, lines 16-41), US4871822 (column 2, line 14 through column 4, line 14), US4602061 (column 3, line 14 through column 4, line 14), US4408018 (column 2, lines 19-68) and US4217396 (column 1, line 60 through column 2, line 64). Acrylates, fumarates and maleates are preferred. Most preferably, the component (II) is an unsaturated acryloyl functional component.

A first preferred group of suitable components (II) are the acrylic esters of components containing 2-6 hydroxyl groups and 1-20 carbon atoms. These esters may optionally contain hydroxyl groups. Especially preferred examples include hexanediol diacrylate, trimethylol propane triacrylate, pentaerythritol triacrylate, ditrimethylolpropane tetraacrylate. Apart from acryloyl esters, a class of suitable components B are acrylamides.

As a second preferred example may be mentioned polyesters based upon maleic, fumaric and/or itaconic acid (and maleic and itaconic anhydride), and di- or polyvalent hydroxyl components, optionally including a monovalent hydroxyl and/or carboxyl component.

As a third preferred example may be mentioned resins as polyesters, polyurethanes, polyethers and/or alkyd resins containing pendant activated unsaturated groups. These include, for example, urethane acrylates obtained by reaction of a polyisocyanate with an hydroxyl group- containing acrylic ester, e.g., an hydroxyalkyl ester of acrylic acid or a component prepared by esterification of a polyhydroxyl component with less than a stoichiometric amount of acrylic acid; polyether acrylates obtained by esterification of an hydroxyl group-containing polyether with acrylic acid; polyfunctional acrylates obtained by reaction of an hydroxyalkyl acrylate with a polycarboxylic acid and/or a polyamino resin; polyacrylates obtained by reaction of acrylic acid with an epoxy resin; and polyalkylmaleates obtained by reaction of a monoalkylmaleate ester with an epoxy resin and/or an hydroxy functional oligomer or polymer.

Most preferred activated unsaturated group-containing components B are the unsaturated acryloyl functional components. It is also especially preferred that the acid value of the activated unsaturated group-containing components is sufficiently low to not substantially impair activity of the catalyst, so preferably less than about 2, most preferably less than 1 mg KOH/g. As exemplified by the previously incorporated references, these and other activated unsaturated group-containing components, and their methods of production, are generally known to those skilled in the art, and need no further explanation here. Preferably the functionality is 2-20, the equivalent weight (EQW: average molecular weight per reactive functional group) is 100-2000, and the number average molecular weight preferably is Mn 200-5000.

The amount of component (II) in the top coat composition may be 5 to 50 wt%, such as 10 to 40 wt% of the top coat composition. It will be appreciated that the amounts of components (I) and (II) are dependent on the nature of the components and the number of reactive functional groups within each component.

The mixing ratio of component (I) and (II) is governed by the relative number of reactive functional groups in each component. The mixing ratio of the (I) and (II) components is ideally 1:1 to 10:1, such as 5:1 to 2:1.

### Pot Life Extender Component (IV)

The top coat composition also preferably contains a pot life extender called component (IV) herein. Component (IV) is preferably a N-H group containing heterocycle, preferably a substituted or unsubstituted triazole, pyrazole or imidazole, preferably 1,2,4-triazole, benzotriazole or 2-methyl-4-nitroimidazole and/or an imide derivative, preferably cyclic, preferably an optionally substituted succinimide or glutarimide.

During the crosslinking reaction, the catalyst component deprotonates the reactant (I) to allow a nucleophlic crosslinking reaction to take place. The use of an extender (IV) allows better control over the curing reaction as the component (IV) acts as a sink for the base, slowing down what could be an overly rapid curing reaction.

Preferably, the top coat composition therefore comprises an X-H group containing component (IV) that is also a Michael addition donor reactable with component (II) under the action of the catalyst, wherein X is N, P, O, S or wherein X is C as part of an acidic methyl (CH₃) group. The invention further relates to the use of component (IV) to increase pot life and improve surface appearance by elongated open time.

The pKa of the X-H group in component (IV) is preferably lower than 13, more preferable lower than 12, more preferably lower than 11, most preferably lower than 10. It is preferably higher than 7, more preferably higher than 8. Suitable components (IV) can be chosen on the basis of pKa values as indicated from the group consisting of succinimide (9.5), ethosuximide (9.3), 5,5- dimethylhydantoin (10.2), 1,2,4-triazole (10.2), 1,2,3-triazole (9.4), benzotriazole (8.2), benzenesulfonamide (10.1), nitromethane (10.2), isatine (10.3), uracil (9.9), 4-nitro-2-methylimidazole (9.6), phenol (10.0), ethylacetoacetate (10.7), acetylacetone (9.0), diethylmalonate (13.0), most preferably succinimide and 1,2,4-triazole.

If present, component (IV) may form 1 to 5 wt% of the top coat composition. Component (IV) is typically formulated with the binder (first composition in the top coat). If present, component (IV) may form 0.1 to 5 wt% of the first composition of the top coat.

We have also observed that the nature of the solvent used in the top coat composition can also be important for controling cure time. Advantages can be achieved in pot life if in the top coat composition at least part of the solvent is a primary alcohol solvent. The solvent can be a mixture of a non-alcoholic solvent and an alcohol solvent. Preferably, the alcohol is present in an amount of at least 1, preferably 2, more preferably 3, most preferably at least 5, even more preferably at least 10 wt % in the top coat composition and in view of VOC constraints preferably at most 45, preferably at most 40 wt%, most preferably less than 30wt%.

The alcohol solvent preferably is one or more primary alcohols, more preferably a mono-alcohol having 1 to 20, preferably 1 - 10, more preferably 1 - 6 carbon atoms, preferably selected from the group of ethanol, n-propanol, n-butanol, n-amyl alcohol and butylglycol

It will be appreciated that the top coat composition may contain other components such as solvents, thixotropic agents, additives, pigments, extenders and so on as is known in the art.

### Top Coat Component (III): The base catalyst

The base catalyst generally is a substituted carbonate salt of formula (X)

X-OCOO-R (X)

wherein X represents an alkali-or earth-alkali metal ion, ammonium or phosphonium ion and wherein R is hydrogen, alkyl or aralkyl group. X preferably represents a lithium, sodium or potassium ion, or more preferably a quaternary ammonium or phosphonium ion NQ₄ or PQ₄ where Q represents alkyl, aryl or aralkyl group.

Most preferably R is an alkyl having 1 to 4 carbon atoms. These simple alkyl carbonates can be prepared easily by reaction of corresponding hydroxides with dialkylcarbonates or by the reaction of tertiary amines with dialkylcarbonates in alcohols.

It has been found that the pot life or the gel-time of the top coat composition is longer when the quaternary ammonium alkylcarbonates are used. Ideally those will have two, preferably three of the four Q radicals independently each more than 4 carbons but at most 18 carbons in length and the remaining Q radical at least 2 carbons atoms. Good results can generally be obtained if the Q groups on the quaternary cation comprise 4 - 18 carbon atoms. Surprisingly good results were also obtained with longer alkyl groups wherein the cation comprises at least two, preferably three or, more preferably, all four Q groups between 5 and 18 carbon atoms and the remaining Q groups comprise 1-18 carbon atoms.

Tetrahexylammonium methylcarbonate, tetradecyl-(i.e.C-14) -trihexylammonium- methylcarbonate and tetradecylammonium methyl-carbonate for instance yielded longer pot lives than tetrabutylammonium methylcarbonate, benzyltrimethylammonium methylcarbonate, or trihexylmethylammonium methylcarbonate or trioctylmethylammonium methylcarbonate. These organic groups on the quaternary ammonium or phosphonium cation provide good compatibility of the catalyst with the top coat binder (the (I) and (II) components) and organic solvents as well as good pot life.

Good results were also obtained with tetrahexylammonium bicarbonate.

The amount of catalyst employed can vary but typically it forms 1 to 5 wt% of the top coat composition, such as 1 to 3 wt%.

The most preferred embodiment is a top coat composition comprising:
a) a malonate containing compound as component (I),
b) an unsaturated acryloyl functional compound as component (II),
c) a base catalyst (III) being a substituted carbonate salt according to formula (X)

   XO-C-O-R (X)

   wherein X represents a cation and wherein R is hydrogen, an alkyl, or aralkyl group.

### Other/additional components of the top coat

The top coat composition of the present invention may also include other substances commonly used in coating formulations such as fillers, pigments, matting agents, solvents and other additives such as waxes, dyes, dispersants, wetting agents, surfactants, light stabiliser, water scavengers and thixotropic agents.

It is preferable if the coating composition of the invention is opaque to visible light, i.e. not clear or not transparent to the naked eye. Thus, in a preferable embodiment, the coating composition comprises at least one pigment. Examples of pigments include organic and inorganic pigments.

### Preparation of the Primer and Top-Coat Compositions

The primer composition and the top-coat composition may be prepared by any suitable technique that is commonly used within the field of paint production. Thus, the various constituents may be mixed together using a high speed disperser, a ball mill, a pearl mill, a three-roll mill etc. The paints according to the invention may be filtered using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration.

The primer and top-coat compositions to be used herein are conveniently prepared by mixing the components. As an example, the epoxy primer base component (the first composition) and the curing agent component (the second composition) can be mixed (e.g. in a ratio of approx. 3: 1 by volume) by adding the curing agent to the epoxy resin and stirring well until the mixture is homogeneous. The mixture is immediately ready for application, e.g. by spray application.

The top-coat components can also be mixed and stirred well until the mixture is homogeneous. The mixture is then immediately ready for application, e.g. by spray application.

### Application of the Primer and Top-Coat Compositions

The primer composition and the top-coat composition can be applied to a substrate (in particular a steel structure) by well known standard application methods like conventional air-spraying or by airless- or airmix-spraying equipment (or alternatively by means of a brush or a roller, in particular when used as a stripe coat).

There is no requirement to wait for the primer layer to cure before applying the top coat. It is however preferred if the top coat is applied after the primer layer has begun curing. The primer layer may also be fully cured before application of the top coat. The interval between the application of the primer layer and the top coat may be at least 1 hr, such as at least 2 hrs, sometimes even at least 3 hrs or at least 4 hrs.

The pot life of the primer composition, once mixed is at least 30 mins, such as at least 45 mins measured as described in the examples which follow.

The pot life of the top coat composition, once mixed is at least 60 mins, such as at least 90 mins, preferably 2 hrs measured as described in the examples which follow.

### Film Thickness

The coating system is typically applied in a total dry film thickness of 120-400 µm, such as 150-350 µm. It is typically preferred that the dry film thickness of the primer layer is higher that the dry film thickness of the top-coat. This being said, it is preferred that the dry film thickness of the primer layer is at least 100 µm. The applied film thickness might vary depending on the nature of substrate being coated.

### Curing

Once a substrate is coated with the coating, the coating must be cured. The primer may be cured or partly cured before application of the top coat (and then again after application of the top coat) Both primer layer and top coat may cure simultaneously. Whilst irradiation and heat may be used to encourage curing, the compositions of the invention cure at ambient temperature without fuher intervention.

An important reason for using a primer is to seal the surface quickly and make a good foundation for the top-coat, without fibre-popping or pinholes from bubbling or pores in the film. Whilst the top coat may be applied to the primer before curing takes place, it is advantageous if the primer layer cures rapidly. By having a rapid curing primer due to the different properties of the primer layer compositions, the top coat essentially cures on a cured primer therefore mimicking the conventional two cure solution. The top coat preferably cures faster than the primer layer.

The dry time of the primer layer is preferably less than 2 hrs. The dry time of the top coat (i.e. the time to completion of curing) is preferably less than 2 hrs.

The invention will now be described with reference to the following non limiting examples.

### Analytical methods

### General procedure for preparation of the compositions

Component (I) of the primer layer was made by mixing all the indicated ingredients (in parts by weight) in a dissolver in a conventional manner known to the person skilled in the art. Component (I) was then subsequently mixed with Component (II)/Curing agent prior to application. The same process is used for formulation of the top coat.

The primer layer and subsequent top cot are both applied by conventional airless spraying to a steel substrate.

### Determination of viscosity using Cone and Plate viscometer

The viscosity of the binders and paint compositions are determined according to ISO 2884-1:2006 using a Cone and Plate viscometer set at a temperature of 23°C or 40°C and providing viscosity measurement range of 0-10 P at 10000 s⁻¹.

### Determination of through-dry by modified Bandow-Wolff test

Through-dry time was tested using modified Bandow-Wolf method in accordance with ISO 9117-5 "Paints and varnishes - Drying tests- Part 5: Modified Bandow-Wolff test". The samples were dried at 23C/50%RH.

The through-dry state was defined as the time from application to drying state 7 was reached according to ISO 9117-5 i.e. "The paper does not stick to the coating. In the area acted on by the load, the coating surface shows no visible changes." The samples were cured at 23C/50%RH.

### Determination of through-dry by mechanical thumb test

Alternative through-dry time was tested using mechanical thumb method in accordance with ISO 9117-1 "Paints and varnished - Drying tests - Part 1: Determination of through-dry state and through-dry time". The samples were dried at 23C/50%RH

The through-dry state was defined as the time from application to the point where the rubber disc gave no visible damage to the coating film in accordance with ISO 9117-1. The samples were cured at 23C/50%RH.

### Determination of drying time by Beck Koller (BK)

The samples were dried at 23C/50%RH. Beck Koller drying time was tested using the Beck Koller method in accordance with ASTM D5895. T3 : Surface Hardening Commenced. T4 : Surface hard.

### Determination of adhesion by pull-off

The adhesion of the substrate was tested in accordance with ISO 4624. The maximum tensile strength (in MPa) applied to the coating before adhesion failure between coating system and substrate was measured using a portable adhesion tester (PAT) and the nature of the adhesive failure characterized in accordance with ISO 4624, i.e. A, B.. Z equals cohesive failure and A/B, B/C... Y/Z equals adhesive failure.

### Determination of adhesion by cross-cut

The adhesion of the substrate was tested in accordance with ISO 2409 in the film thicknesses given in table 4. The cross cut was made with a single blade cutter and 3mm spacing. The test result was obtained by using the classification of table 1 given in standard ISO 2409.

### Determination of pot life

The pot life of the paints is determined by measuring the viscosity increase directly after mixing of minimum 100g of the paint compositions. The viscosity is measured according to ISO 2884-1:2006 using a Cone and Plate viscometer set at a temperature of 23°C and providing viscosity measurement range of 0-10 P at 10000 s⁻¹. The pot life is set to the time where the viscosity has doubled.

### Determination of dry film thickness (DFT)

Dry film thickness is measured using an elcometer.

### Determination of solids content of the compositions

The solids content in the compositions are calculated in accordance with ASTM D5201.

### Calculation of the volatile organic compound (VOC) content of the coating compositions

The volatile organic compound (VOC) content of the coating compositions is calculated in accordance with ASTM D5201.

### Examples

The following examples were prepared:

**Table 2**

| Table 1 | | **P1** | **P2** | **Cp1.** |
|---|---|---|---|---|
| **Component A** | | | | |
| Epoxy resin | Liquid bis A epoxy EEW 187-192 based on solids | 13.0 | 15.0 | 3.0 |
| | Semi-solid bis A epoxy EEW 230-260 based on solids (80wt% in xylene) | 0 | 0 | 29.0 |
| | Solid bis A epoxy EEW 430-480 based on solids (75wt% in xylene) | 10.0 | 6.7 | 0 |
| | Reactive diluent | 0 | 0 | 4,0 |
| | Solvents | 12.6 | 14.8 | 8.8 |
| | Acrylic esters of 1,6-hexanediol and pentaerythritol | 0,3 | 0 | 0 |
| | Additives, pigments | 0.3 | 3.0 | 4.5 |
| Extenders | Feldspar, TiO2 CaCO3, Al2O3, Talc | 63.8 | 60.5 | 50.7 |
| | | 100 | 100 | 100 |
| **Component B (Hardener)** | | | | |
| | Phenalkamine hardener AHEW 150-170 | 100 | 97.5 | 88.5 |
| | Ancamine K54 /Catalyst, tertiary amine. 2,4,6-tris(dimethylaminomethyl)phenol: Curing accelerator | 0 | 2.5 | 0 |
| | Solvent | 0 | 0 | 11.5 |
| | | 100 | 100 | 100 |

| Volume Solid content [%] | 71 | 74 | 72 |
|---|---|---|---|
| VOC [g/L] | 245 | 260 | 220 |
| Mixing volume ratio, A:B | 4:1 | 4:1 | 3:1 |

Components A and B are mixed as shown in table 2 above.

Thereafter a top coat is applied:

**Table 3**

| Top Coat | | **Composition 1** |
|---|---|---|
| **Component A** | | **Michael Addition (MA)** |
| Binder | Setal X 12063 | 32.08 |
| | Sartomer SR355 (DITRIMETHYLOLPROPANE TETRAACRYLATE) | 17.46 |
| Solvent Additive | Isopropanol | 8.6 |
| | Butyl Acetate | 4.88 |
| | 1,2,4-triazole | 0.47 |
| | Succinimide | 0.28 |
| | Dispersion agent | 1.17 |
| | UV stabilizer | 0.48 |
| | Thixotropic agent | 0,97 |
| Pigment | TiO2 | 19.32 |
| Extender | Microdol | 14.29 |
| **SUM Comp. A** | | **100** |

| **Component B** | | |
|---|---|---|
| | RMA catalyst (0.95mmol/g) | 2.48 |
| **SUM total** | | **102.48** |
| **Volume solids** | | **69%** |

Comparable top coat example:

**Table 4**

| Generic technology | 2K acrylic polyurethane (PU) | |
|---|---|---|
| VS% | 63 | % |
| VOC | 236 | g/L |

Setal X12063 is a malonate Michael addition donor commercially available from Nuplex.

**Table 5: Drying times and adhesion values for the 2 coat system.**

| Combinations of different epoxy primers, Michael Addition cured top coat and conventional polyurethane top coat are tested. | | | | | | | | | | |
|---|---|---|---|---|---|---|---|---|---|---|
| Example | System | Overcoat interval | Total DFT [µm] (average) | DFT[µm] 1st coat | DFT[µm] 2nd coat | Through dry ISO 9117-5 [hh:mm] | Through dry ISO9117-1-[hh:mm] | Adhesion [Mpa] | Fracture type | Cross cut |
| 1 | P1+MA | 2h | 280 | 180 | 100 | 03:45 | 03:45 | 10 | 100C | 0 |
| 2 | P1+MA | 4h | 300 | 200 | 100 | 05:45 | 05:45 | 11 | 100C | 0 |
| 3 | P2 + MA | 2h | 250 | 150 | 100 | 03:00 | 03:00 | 9,9 | 100C | 0 |
| 4 | P2 + MA | 4h | 300 | 200 | 100 | 05:00 | 05:00 | 9,9 | 100C | 0 |
| C1 | P1 | | 150 | 150 | | 03:30 | 03:30 | | | |
| C2 | Cp1 | | 130 | 130 | | 04:00 | 04:00 | | | |
| C3 | P2 | | 135 | 135 | | 02:30 | 02:30 | | | |
| C4 | Cp1 + MA | 2h | 270 | 170 | 100 | >06:00 | >06:00 | 10,2 | 30A/B70C | 0 |
| C5 | Cp1 + MA | 4h | 270 | 170 | 100 | >06:00 | >06:00 | 9,2 | 100C | 0 |
| C6 | P1+ PU | 2h | 190 | 130 | 60 | 12:00-24:00 | 12:00-24:00 | | | |
| C7 | P1 + PU | 4h | 230 | 170 | 60 | 12:00-24:00 | 12:00-24:00 | 8,5 | 100C↓ | 1 |
| C8 | Cp1 + PU | 2h | 210 | 150 | 60 | 12:00-24:00 | 12:00-24:00 | | | |
| C9 | Cp1 + P2 | 4h | 210 | 150 | 60 | 12:00-24:00 | 12:00-24:00 | 7,4 | 100B/C | 0 |
| C10 | P2 + PU | 2h | 210 | 150 | 60 | 12:00-24:00 | 12:00-24:00 | | | |
| C11 | P2 + PU | 4h | 220 | 160 | 60 | 12:00-24:00 | 12:00-24:00 | 9 | 100C↓ | 0 |

The adhesion results were good for C4 and C5, but the combination of primer and top coat was not ideal due to poor through dry.

The samples were surface dry after 6hrs, but not through dry due to slow curing between the interface between Cp1 and MA.

**Table 6: Pot life, viscosity and drying time of the Michael Addition curing top coat using different solvents:**

| | **Iso-propanol*** | **n-propanol** | **ethanol** | **n-butanol** |
|---|---|---|---|---|
| Pot-life | 2.5h | 2h | 3.5h | 2.5h |
| Beck Koller drying time 6h 23°C 40%RH | T3: 20min | T3: 15min | T3:15min | T3:15min |
| | T4:40min | T4: 30min | T4:25min | T4:25min |

| | | | | |
|---|---|---|---|---|
| *Isopropanol used in Composition MA | | | | |

## Claims

1. A coating system suitable for application to a metallic substrate comprising:
A) a primer layer composition comprising:
(i) a first composition comprising:
(I) at least one epoxy resin and
(ii) a second composition comprising at least one amine curing agent; and
B) a top coat composition comprising:
(i) a first composition comprising:
(I) at least one crosslinkable component having at least two acidic C-H protons;
(II) at least one unsaturated group containing component that reacts via Real Michael Addition with component (I), and
(ii) a second composition comprising a catalyst for said Michael addition.

2. A coating system as claimed in claim 1 wherein said A(ii) second composition is suitable for mixing with said A(i) first composition before application of the primer composition to a substrate; and
said B(ii) second composition is suitable for mixing with said B(i) first composition before application of the top coat composition to the substrate.

3. A coating system as claimed in any preceding claim wherein an acrylic ester is present in the first composition A(i).

4. A coating system as claimed in any preceding claim comprising a blend of liquid and solid epoxy resins in said first composition A(i).

5. A coating system as claimed in any preceding claim comprising at least one epoxy resin component with an EEW less than 300 and a second epoxy resin with EEW more than 300.

6. A coating system as claimed in any preceding claim wherein the top coat compositon comprises:
a) a crosslinkable composition comprising a malonate containing compound as component (I),
b) an unsaturated acryloyl functional compound as component (II),
c) a base catalyst being a substituted carbonate salt according to formula (X)
X O-CO-O-R (X)
wherein X represents a cation and wherein R is hydrogen, an alkyl, or aralkyl group.

7. A coating system as claimed in any preceding claim wherein the top coat composition further comprises a triazole or imide such as succinimide.

8. A coating system as claimed in any preceding claim wherein the acrylic ester is a di, tri or tetra (meth)acrylate ester of a polyol.

9. A coating system as claimed in any preceding claim wherein the primer layer composition amine curing agent is a phenalkamine.

10. A coating system as claimed in any preceding claim wherein the top coat composition comprises an alcohol solvent.

11. A coating system as claimed in any preceding claim wherein epoxy resin of the primer layer composition has an EEW of 350-700.

12. A coating system as claimed in any preeding claim consisting of the primer layer and top coat layer only.

13. A metal substrate having coated thereon a coating system as claimed in any preceding claim.

14. A process for coating a metal substrate, such as a steel substrate, comprising applying to said substrate a primer layer composition comprising:
(I) at least one epoxy resin; and
(II) at least one amine curing agent; and
applying to said primer layer composition a top coat composition comprising
(I) at least one crosslinkable component having at least two acidic C-H protons;
(II) at least one unsaturated group containing component that reacts via Real Michael addition with component (I), and
(III) a catalyst for said Michael addition;
and allowing said compositions to cure.

15. A coated metal substrate obtained by the process as claimed in claim 14.

16. Use of coating system as claimed in claim 1 to 13 for protecting a metal substrate.

## Patentansprüche

1. Beschichtungssystem, welches zum Aufbringen auf ein metallisches Substrat geeignet ist, umfassend:
A) eine Primer-Schichtzusammensetzung, umfassend:
(i) eine erste Zusammensetzung, umfassend:
(I) mindestens ein Epoxyharz, und
(ii) eine zweite Zusammensetzung, umfassend mindestens ein Amin-Härtungsmittel; und
B) eine Topcoat-Zusammensetzung, umfassend:
(i) eine erste Zusammensetzung, umfassend:
(I) mindestens eine vernetzbare Komponente, die mindestens zwei saure C-H-Protonen aufweist,
(II) mindestens eine ungesättigte Gruppe, enthaltend eine Komponente, die über eine reale Michael-Addition mit der Komponente (I) reagiert, und
(ii) eine zweite Zusammensetzung, umfassend einen Katalysator für die Michael-Addition.

2. Beschichtungssystem nach Anspruch 1, wobei die A(ii) zweite Zusammensetzung zum Mischen mit der A(i) ersten Zusammensetzung vor dem Aufbringen der Primer-Zusammensetzung auf ein Substrat geeignet ist; und
die B(ii) zweite Zusammensetzung zum Mischen mit der B(i) ersten Zusammensetzung vor dem Aufbringen der Topcoat-Zusammensetzung auf das Substrat geeignet ist.

3. Beschichtungssystem nach einem der vorstehenden Ansprüche, wobei ein Acrylester in der ersten Zusammensetzung A(i) vorhanden ist.

4. Beschichtungssystem nach einem der vorstehenden Ansprüche, umfassend eine Mischung einer Flüssigkeit und fester Epoxyharze in der ersten Zusammensetzung A(i).

5. Beschichtungssystem nach einem der vorstehenden Ansprüche, umfassend mindestens eine Epoxyharz-Komponente mit einem EEW von weniger als 300 und ein zweites Epoxyharz mit einem EEW von mehr als 300.

6. Beschichtungssystem nach einem der vorstehenden Ansprüche, wobei die Topcoat-Zusammensetzung umfasst:
a) eine vernetzbare Zusammensetzung, umfassend ein Malonat, enthaltend die Verbindung als Komponente (I),
b) eine ungesättigte funktionelle Acryloyl-Verbindung als Komponente (II),
c) einen Basenkatalysator, der ein substituiertes Carbonatsalz gemäß der Formel (X) ist:
X O-CO-O-R (X),
wobei X ein Kation darstellt, und wobei R Wasserstoff, ein Alkyl oder eine AralkylGruppe ist.

7. Beschichtungssystem nach einem der vorstehenden Ansprüche, wobei die Topcoat-Zusammensetzung weiter ein Triazol oder Imid, wie Succinimid, umfasst.

8. Beschichtungssystem nach einem der vorstehenden Ansprüche, wobei der Acrylester ein Di-, Tri- oder Tetra-(meth)acrylatester eines Polyols ist.

9. Beschichtungssystem nach einem der vorstehenden Ansprüche, wobei das Amin-Härtungsmittel der Primer-Schichtzusammensetzung ein Phenalkamin ist.

10. Beschichtungssystem nach einem der vorstehenden Ansprüche, wobei die Topcoat-Zusammensetzung ein Alkohol-Lösungsmittel umfasst.

11. Beschichtungssystem nach einem der vorstehenden Ansprüche, wobei das Epoxyharz der Primer-Schichtzusammensetzung ein EEW von 350 bis 700 aufweist.

12. Beschichtungssystem nach einem der vorstehenden Ansprüche, bestehend nur aus der Primer-Schicht und Topcoat-Schicht.

13. Metallsubstrat, welches darauf beschichtet ein Beschichtungssystem nach einem der vorstehenden Ansprüche aufweist.

14. Verfahren zur Beschichtung eines Metallsubstrats, wie eines Stahlsubstrats, umfassend das Aufbringen, auf das Substrat, einer Primer-Schichtzusammensetzung, umfassend:
(I) mindestens ein Epoxyharz; und
(II) mindestens ein Amin-Härtungsmittel; und
Aufbringen, auf der Primer-Schichtzusammensetzung, einer Topcoat-Zusammensetzung, umfassend
(I) mindestens eine vernetzbare Komponente, die mindestens zwei saure C-H-Protonen aufweist;
(II) mindestens eine ungesättigte Gruppe, enthaltend eine Komponente, die über eine reale Michael-Addition mit der Komponente (I) reagiert; und
(III) einen Katalysator für die Michael-Addition;
und Aushärtenlassen der Zusammensetzung.

15. Beschichtetes Metallsubstrat, welches durch das Verfahren nach Anspruch 14 erhalten wird.

16. Verwendung eines Beschichtungssystems nach Anspruch 1 bis 13, zum Schützen eines Metallsubstrats.

## Revendications

1. Système de revêtement approprié pour une application à un substrat métallique, comprenant :
A) une composition de couche primaire comprenant :
(i) une première composition comprenant :
(I) au moins une résine époxy et
(ii) une seconde composition comprenant au moins un agent de durcissement à base d'amine ; et
B) une composition de couche de finition comprenant :
(i) une première composition comprenant :
(I) au moins un composant pouvant être réticulé ayant au moins deux protons C-H acides ;
(II) au moins un groupe non saturé contenant un composant qui réagit via une Addition de Michael Réelle avec le composant (I), et
(ii) une seconde composition comprenant un catalyseur pour ladite addition de Michael.

2. Système de revêtement selon la revendication 1, dans lequel ladite seconde composition A(ii) est appropriée pour un mélange avec ladite première composition A(i) avant l'application de la composition primaire à un substrat ; et
ladite seconde composition B(ii) est appropriée pour un mélange avec ladite première composition B(i) avant l'application de la composition de couche de finition au substrat.

3. Système de revêtement selon l'une quelconque des revendications précédentes, dans lequel un ester acrylique est présent dans la première composition A(i).

4. Système de revêtement selon l'une quelconque des revendications précédentes, comprenant un mélange de résines époxy liquide et solide dans ladite première composition A(i).

5. Système de revêtement selon l'une quelconque des revendications précédentes comprenant au moins un composant de résine époxy avec un EEW inférieur à 300 et une seconde résine époxy avec un EEW supérieur à 300.

6. Système de revêtement selon l'une quelconque des revendications précédentes, dans lequel la composition de couche de finition comprend :
a) une composition pouvant être réticulée comprenant un composé contenant du malonate en tant que composant (I),
b) un composé fonctionnel acryloyle non saturé en tant que composant (II),
c) un catalyseur de base étant un sel de carbonate substitué selon la formule (X)
X O-CO-O-R (X)
dans laquelle X représente un cation et dans laquelle R est un hydrogène, un alkyle, ou un groupe aralkyle.

7. Système de revêtement selon l'une quelconque des revendications précédentes, dans lequel la composition de couche de finition comprend en outre un triazole ou un imide comme du succinimide.

8. Système de revêtement selon l'une quelconque des revendications précédentes, dans lequel l'ester acrylique est un ester de di, tri ou tétra (méth)acrylate d'un polyol.

9. Système de revêtement selon l'une quelconque des revendications précédentes, dans lequel l'agent de durcissement à base d'amine de la composition de couche primaire est une phénalcamine.

10. Système de revêtement selon l'une quelconque des revendications précédentes, dans lequel la composition de couche de finition comprend un solvant à base d'alcool.

11. Système de revêtement selon l'une quelconque des revendications précédentes, dans lequel la résine époxy de la composition de couche primaire a un EEW de 350 à 700.

12. Système de revêtement selon l'une quelconque des revendications précédentes, constitué seulement par la couche primaire et la couche de finition.

13. Substrat de métal ayant un système de revêtement selon l'une quelconque des revendications précédentes appliqué en revêtement sur celui-ci.

14. Processus de revêtement d'un substrat de métal, tel qu'un substrat d'acier, comprenant l'application audit substrat d'une composition de couche primaire comprenant :
(I) au moins une résine époxy ; et
(II) au moins un agent de durcissement à base d'amine ; et
l'application à ladite composition de couche primaire d'une composition de couche de finition comprenant
(I) au moins un composant pouvant être réticulé ayant au moins deux protons C-H acides ;
(II) au moins un groupe non saturé contenant un composant qui réagit via une addition de Michael Réelle avec le composant (I), et
(III) un catalyseur pour ladite addition de Michael ;
et la permission auxdites compositions de durcir.

15. Substrat de métal revêtu obtenu par le processus selon la revendication 14.

16. Utilisation d'un système de revêtement selon les revendications 1 à 13 pour protéger un substrat de métal.
